Europäisches Patentamt

European Patent Office

Office européen des brevets

(11) Veröffentlichungsnummer: **0 349 544 B1**

(12) **EUROPÄISCHE PATENTSCHRIFT**

(45) Veröffentlichungstag der Patentschrift:
**12.06.91 Patentblatt 91/24**

(51) Int. Cl.$^5$: **B60T 8/68**

(21) Anmeldenummer: **88901831.3**

(22) Anmeldetag: **23.02.88**

(86) Internationale Anmeldenummer:
**PCT/EP88/00130**

(87) Internationale Veröffentlichungsnummer:
**WO 88/07466 06.10.88 Gazette 88/22**

(54) **ANTIBLOCKIERREGELSYSTEM.**

(30) Priorität: **23.03.87 DE 3709483**

(43) Veröffentlichungstag der Anmeldung:
**10.01.90 Patentblatt 90/02**

(45) Bekanntmachung des Hinweises auf die
Patenterteilung:
**12.06.91 Patentblatt 91/24**

(84) Benannte Vertragsstaaten:
**DE FR GB IT SE**

(56) Entgegenhaltungen:
**DE-A- 2 204 092
GB-A- 1 018 548
US-A- 3 508 795
US-A- 3 967 862**

(73) Patentinhaber: **ROBERT BOSCH GmbH
Postfach 10 60 50
W-7000 Stuttgart 10 (DE)**

(72) Erfinder: **VAN ZANTEN, Anton
Waldstrasse 15/2
W-7257 Ditzingen 1 (DE)**
Erfinder: **KOST, Friedrich
Heinrich-Ebner-Strasse 24
W-7000 Stuttgart 50 (DE)**

(74) Vertreter: **Kammer, Arno, Dipl.-Ing.
ROBERT BOSCH GmbH Zentralabteilung
Patente Postfach 50
W-7000 Stuttgart 1 (DE)**

## Beschreibung

Die Erfindung betrifft ein Antiblockierregelsystem mit den Merkmalen des Oberbegriffs des Anspruchs 1.

Stand der Technik

Die Verwendung der Differenz D zwischen Fahrzeugverzögerung und Radverzögerung als Regelgröße in einem Antiblockierregelsystem ist, wie sich aus ATZ 71 (1969/Heft 6, S. 181-189 insb. S. 184) ergibt, bereits realisiert worden. Diese Regelungsart hat sich jedoch nicht bewährt.

Problembeschreibung

Während einer ABS-Bremsung ist es von ausschlaggebender Bedeutung, daß man erkennt, wann der Reifenschlupf das Maximum der µ-Schlupfkurve überschreitet. Wenn diese Erkenntnis zu spät kommt, dann kann es passieren, daß der Druck im Radbremszylinder nicht mehr schnell genug abgebaut werden kann, um ein Blockieren des Rades zu verhindern. Je früher die Erkenntnis vorliegt, desto früher kann der Radbremsdruck abgebaut werden. Mit einer früheren Erkenntnis ist es möglich, die Differenz zwischen Sollschlupf und Maximalschlupf kleiner zu halten, als mit einer späteren Erkenntnis.

Nun erschweren allerlei äußeren Umstände wie Fahrbahnunebenheiten und andere Fahrbahninhomogenitäten die genaue Erkenntnis, wann die Radgeschwindigkeit die Instabilitätsgrenze (d.h. die Radgeschwindigkeit die zum Maximum der Reifenschlupfkurve gehört), unterschreitet. Die gemessene Radgeschwindigkeit wird deshalb üblicherweise gefiltert und nach der Filterung zur Instabilitätsbestimmung herangezogen.

Eine weitere Hilfe zur rechtzeitigen Instabilitätserkennung würde es sein, wenn Mittel vorhanden wären, die Instabilität vorherzusagen. Dies kann man erreichen mit einer Schätzung der Stabilitätsreserve.

Wenn der Reifenschlupf kleiner ist als der, welcher zum Maximum der Reifenschlupfkurve gehört, dann befindet sich das Rad im stabilen Gebiet der Schlupfkurve. Im folgenden wird nun, vorausgesetzt, daß sich der Schlupf im stabilen Gebiet der Schlupfkurve befindet, die Differenz zwischen tatsächlichem Reifenschlupf und Reifenschlupf, welcher zum Maximum der µ-Schlupfkurve gehört als Stabilitätsreserve bezeichnet. Je größer die Differenz, desto größer ist die Stabilitätsreserve. Je größer die Stabilitätsreserve ist, desto größer ist die Differenz zwischen dem momentanen Radbremsdruck und dem Radbremsdruck, welcher zu dem Maximum der Schlupfkurve gehört. Andererseits, je kleiner die Stabilitätsreserve, desto näher ist der Radbremsdruck dem Radbremsdruck, welcher zum Maximum der Reifenschlupfkurve gehört.

Wie oben beschrieben, wird das Rad außer von dem Radbremsdruck auch von anderen Einwirkungen wie Fahrbahnunebenheiten und anderen Störungen angeregt. Befindet sich der Reifenschlupf im stabilen Gebiet der Schlupfkurve, weit weg von der Instabilitätsgrenze (d.h. die Stabilitätsreserve ist groß), dann führen diese Störungen zu kleineren Reifenschlupfänderungen als wenn die Stabilitätsreserve klein ist. Das Störverhalten des Rades gibt also Aufschluß über die Stabilitätsreserve. Je schneller die Reifenschlupfänderung aufgrund einer Störung wieder abklingt, desto größer ist die Stabilitätsreserve.

Aufgabe und Lösung

Der Erfindung liegt die Aufgabe zugrunde, ein Antiblockierregelsystem zu schaffen, das den Abstand des Istschlupfs von dem Maximum der augenblicklichen µ-Schlupfkurve erkennen kann und damit die Möglichkeit hat, laufend den Istschlupf nahe an das Maximum der µ-Schlupfkurve aber links vom Maximum zu legen.

Diese Aufgabe wird durch die im Anspruch 1 angegebenen Merkmale gelöst.

Das Störverhalten des Rads läßt sich quantifizieren, in dem man das System Rad-Reifen-Fahrbahn als linearen Auto-Regressiv-Prozeß (AR-Prozeß) modelliert und identifiziert. Kennzeichnend für stabile AR-Prozesse ist, daß der stationäre- oder Mittelwert des Ausgangs Null ist.

Voraussetzung für dieses Modell ist, daß während der Identifikation nur Störungen den Prozeß anregen, wobei der Anfangszustand nicht Null sein muß. Während der Identifikation sollte also der Radbremsdruck näherungsweise konstant bleiben.

Die Identifikation sollte vorzugsweise kurz nach dem Drucksprung anfangen, und zwar dann, wenn die Differenzverzögerung D maximal ist.

Aus den Parametern des AR-Modells läßt sich dann bestimmen, ob das System Rad-Reifen-Fahrbahn stabil oder instabil ist. Weiter läßt sich noch ein Maß für die Stabilitätsreserve ableiten.

Da das System Rad-Reifen-Fahrbahn nichtlinear ist, das AR-Modell jedoch linear ist, darf die Identifikation nur über eine begrenzte Zeit ablaufen. Weiter hat es sich gezeigt, daß die Modellierung der Differenzverzögerung D bessere Ergebnisse liefert als die Modellierung der Differenzgeschwindigkeit zwischen Fahrzeug und Radgeschwindigkeit.

Die Identifikation beruhend auf der Differenzverzögerung D gemäß der Erfindung benutzt als Messung die Differenz zwischen Radverzögerung und Fahrzeugverzögerung.

Dabei wird angenommen, daß die Fahrzeugverzögerung durch Messung oder durch Schätzung zur Verfügung steht.

Der AR-Prozeß wird als normalisiertes oder unnormalisiertes ladder Filter modelliert. Die Identifikation bestimmt die Reflektionskoeffizienten. Das ladder Filter hat sehr viele günstige Eigenschaften, unter anderem, daß die Stabilität des AR-Prozesses direkt aus den Reflektionskoeffizienten ablesbar ist. Wenn sich ein Reflektionskoeffizient dem Wert 1 nähert, dann nähert sich der AR-Prozeß der Instabilitätsgrenze. Wenn ein Reflektionskoeffizient den Wert 1 hat oder größer ist, dann ist der AR-Prozeß instabil. Die Differenz zwischen dem Wert des größten Reflektionskoeffizienten und 1 ist also ein Maß für die Stabilitätsreserve des Systems Rad-Reifen-Fahrbahn. Das normalisierte ladder Filter hat noch zusätzliche Vorteile, unter anderem daß der Rechenaufwand geringer ist und daß alle Variablen auf 1 normiert sind.

Das ladder Filter bildet die exakte Schätzung des AR-Prozesses nach der Methode der kleinsten Quadraten. Eine zusätzliche Filterung, wie vorhin erwähnt, ist nicht notwendig.

Figurenbeschreibung

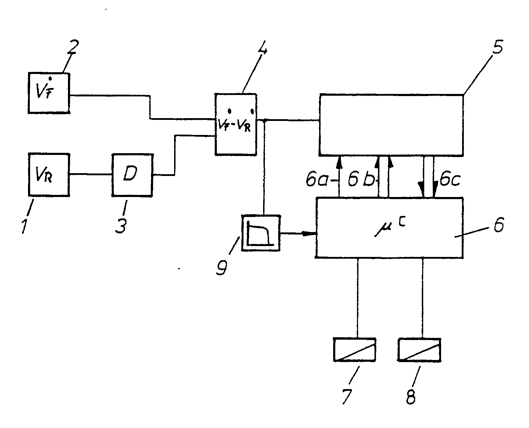

Anhand der Zeichnung wird ein Ausführungsbeispiel der Erfindung erläutert Dort ist mit 1 ein Sensor zur Bestimmung der Radgeschwindigkeit $V_R$ vorgesehen und es ist hier unterstellt, daß auch ein Sensor 2 zur Messung der Fahrzeugverzögerung $V_F$ vorgesehen ist. Wie schon erwähnt, kann die Fahrzeugverzögerung $V_F$ auch in anderer Weise ermittelt werden.

Nach Differentiation der Radgeschwindigkeit in einem Differenzierer 3 wird in einem Subtrahierer 4 die Differenz $D = V_F - V_R$ gebildet. Die Differenz D wird dann einem ladder Filter 5 zugeführt.

Dieses Filter ist mit einer Steuereinrichtung 6, z.B. einem Mikroprozessor einmal über eine Steuerleitung 6a und über Datenleitungen 6b und 6c verbunden.Schließlich ist an den Mikroprozessor 6 eine Ventilkombination bestehend aus einem Einlaßventil 7 und einem Auslaßventil 8 angeschlossen ; mit einer solchen Ventilkombination ist bekanntlich eine Bremsdruckerhöhung, eine Bremsdruckkonstanthaltung und Bremsdruckreduzierung möglich. Der Mikroprozessor 6 ist über ein Tiefpaßfilter 9 mit dem Ausgang des Subtrahierers 4 verbunden.

Der Mikroprozessor steuert das ladder Filter. Das Startsignal zur Identifizierung geht über die Leitung 6a an das ladder Filter 5. Dies erfolgt z.B. am Anfang einer Druckhaltephase im Radbremszylinder. Wenn notwendig, wird das ladder Filter über Leitung 6b initialisiert, d.h., das ladder Filter bekommt beim Start gleich bestimmte Anfangswerte für die Reflektionskoeffizienten und für die Kovarianz.

Die Identifikation wird abgebrochen, wenn der Mikroprozessor ein Stopsignal über Leitung 6a an das ladder Filter schickt. Dies kann z.B. am Ende einer Druckhaltephase erfolgen.

Während der Identifikation kann der Mikroprozessor die Werte der Reflektionskoeffizienten und die Kovarianz die auch im ladder Filter berechnet wird über die Leitung 6c übernehmen. Auf diese Weise ist eine fortlaufende Prüfung des ladder Filters auf Stabilitätsreserve möglich. Bei der Prüfung kann die Kovarianz als Gewichtung oder Entscheidung herangezogen werden. Wenn der AR-Prozess stabil ist, dann ist der Stationärwert am Ausgang Null. Der Kovarianzwert ist dann ein Maß für die Streuung des Ausgangswertes um den Wert Null. Wenn der AR-Prozess instabil ist, dann gibt es kein Stationärwert am Ausgang, d.h. der Betrag des Ausgangswerts steigt im Mittel und somit steigt auch die Kovarianz. Umgekehrt, wenn die Koverianz groß ist, dann ist der AR-Prozess instabil. Da der Wert der Kovarianz auch abhängig ist von der Größe der Störungen, ist eine Aussage über die Stabilität aufgrund des Kovarianzwerts etwas problematisch. Die Identifikation braucht eine gewisse Mindestanzahl von Messungen um die Reflektionskoeffizienten zu bestimmen. Wenn das Rad stark instabil ist, dann wird die Instabilitätserkennung aufgrund der Reflektionskoeffizienten erst bei großem Reifenschlupf erfolgen. Die Kovarianz steigt aber sofort und es ist deshalb wichtig, die Kovarianz in die Stabilitätserkennung einzubeziehen.

Mit Hilfe der ermittelten Reflektionskoeffizienten bzw. der Stabilitätsreserve können nun die Ventile 7/8 gesteuert werden. Ist die Stabilitätsreserve groß, so wird Druck aufgebaut, ist die Stabilitätsreserve klein, so wird Druck konstantgehalten und ist die Stabilitätsreserve fast Null oder negativ, so wird Druck abgebaut.

Wenn die Radverzögerung über längere Zeit kleiner ist als die Fahrzeugverzögerung, z.B. nach einer Druckabbauphase, wenn der Reifenschlupf wieder in das stabile Gebiet der Schlupfkurve zurückkehrt, dann ist eine Identifikation nicht notwendig. Um solche Situationen im Mikroprozessor 6 erkennen zu können, wird die Differenzverzögerung D mit dem Tiefpaßfilter 9 gefiltert. Wenn der Ausgang des Tiefpaßfilters eine im Mikroprozessor festgelegte Schwelle überschreitet, dann ist die Identifikation nicht notwendig.

Die adaptive ladder Filter, insbesondere die normalisierte ladder Filter, können sehr gut als VLSI-Bausteine

EP 0 349 544 B1

ausgelegt werden, da ihre Struktur rekursiv ist. Das Tiefpaßfilter kann auch als VLSI-Baustein ausgelegt oder auch im Mikroprozessor implementiert werden.

Die Algorithmen des normalisierten und des unnormalisierten ladder Filters sind im Anhang angegeben. Der Algorithmus für das Tießpaßfilter ist Stand der Technik.

## Algorithmus für das normalisierte ladder Filter

Es sei $Y_T$ das am Eingang vom ladder Filter anstehende Signal zum Zeitpunkt T (d.h. die Differenzbeschleunigung VRAD-VFZ). Wenn die Parameterschätzung anfängt ist $T = 0$.

Es können, je nach Bedarf, folgende Parameter frei gewählt werden :

$n_{max}$ (maximale Filteranordnung)
$\lambda$ (Vergessfaktor, wobei $0 < \lambda \leqq 1$)
$\tau$ (Anfängliche Kovarianz)

Es werden unter anderem berechnet :

$R_T$ (die Kovarianzschätzung zum Zeitpunkt T)
$\rho_{n, T}$ (der n-te Reflektionskoeffizient zum Zeitpunkt T)

Wenn der Algorithmus zum Zeitpunkt $T = 0$ initialisiert wird, dann wird folgendes gesetzt :

$$R_0 = \tau + Y_0{}^2$$
$$\nu_{0,0} = \eta_{0,0} = Y_0 \cdot R_0{}^{-1}/^2$$
$$\rho_{1,0} = 0, \quad \rho_{2,0} = 0, \quad \ldots, \quad \rho_{n_{max}0} = 0$$

Für die nächsten Zeitpunkte, $T = 1, T = 2,...$ wird bis zum Abbrechen der Parameterschätzung folgendes berechnet :

$$R_T = \lambda \cdot R_{T-1} + Y_T{}^2$$
$$\nu_{0,T} = \eta_{0,T} = Y_T \cdot R_T{}^{-1}/^2$$

$$\text{Für } n = 0 \text{ bis } [\min \{T, n_{max}\} - 1] \text{ berechne}$$

$$\rho_{n+1,T} = \rho_{n+1,T-1} \cdot (1-\nu_{n,T}^2)^1/^2 \cdot (1-\eta_{n,T-1}^2)^1/^2 +$$

$$\nu_{n,T} \cdot \eta_{n,T-1}$$

$$\nu_{n+1,T} = [\nu_{n,T} - \rho_{n+1,T} \cdot \eta_{n,T-1}] \cdot (1-\rho_{n+1,T}^2)^{-1}/^2 \cdot$$

$$(1-\eta_{n,T-1}^2)^{-1}/^2$$

$$\eta_{n+1,T} = [\eta_{n,T-1} - \rho_{n+1,T} \cdot \nu_{n,T}] \cdot (1-\rho_{n+1,T}^2)^{-1}/^2 \cdot$$

$$(1-\nu_{n,T}^2)^{-1}/^2$$

4

Algorithmus für das unnormalisierte ladder Filter

Es sei $Y_T$ das am Eingang vom Filter anstehende Signal zum Zeitpunkt T (d.h. die Differenzbeschleunigung VRAD-VFZ). Wenn die Parameterschätzung anfängt ist T = 0.

Es können, je nach Bedarf, folgende Parameter frei gewählt werden

$$n_{max} \quad \text{(maximale Filteranordnung)}$$

$$\lambda \quad \text{(Vergessfaktor, wobei } 0 < \lambda \leq 1)$$

$$\tau \quad \text{(Anfängliche Kovarianz)}$$

Es werden unter anderem berechnet:

$$\Delta_{n,T} \quad \text{(Korrelation)}$$

$$R^{\epsilon}_{n,T} \quad \text{(Vorwärts Kovarianz)}$$

$$R^{r}_{n,T} \quad \text{(Rückwärts Kovarianz)}$$

$$K^{\epsilon}_{n,T} \quad \text{(Vorwärts Reflektionskoeffizient)}$$

$$K^{r}_{n,T} \quad \text{(Rückwärts Reflektionskoeffizient)}$$

Wenn der Algorithmus zum Zeitpunkt T = 0 initialisiert wird, dann wird folgendes gesetzt :

$$R^{\epsilon}_{0,0} = Y_0^2 + \tau$$

$$R^{r}_{0,0} = Y_0^2 + \tau$$

$$\epsilon_{0,0} = Y_0$$

$$r_{0,0} = Y_0$$

$$\Delta_{1,0} = 0, \quad \Delta_{2,0} = 0, \quad \ldots, \quad \Delta_{n_{max},0} = 0$$

Für die nächsten Zeitpunkte, T = 1, T = 2,... wird bis zum Abbrechen der Parameterschätzung folgendes berechnet :

EP 0 349 544 B1

$$\epsilon_{0,T} = Y_T$$

$$r_{0,T} = Y_T$$

$$\gamma_{1,T} = 0$$

$$R^{\epsilon}_{0,T} = \lambda R^{\epsilon}_{0,T-1} + Y_T^2$$

$$R^{r}_{0,T} = \lambda R^{r}_{0,T-1} + Y_T^2$$

und weiter

$$\text{Für} \quad n = 0 \text{ bis } [\min \{T, n_{max}\} - 1] \text{ berechne}$$

$$\Delta_{n+1,T} = \lambda \cdot \Delta_{n+1,T-1} + \frac{r_{n,T-1} \cdot \epsilon_{n,T}}{1-\gamma_{n,T}}$$

$$\gamma_{n,T} = \gamma_{n-1,T} + (R^{r}_{n,T})^{-1} \cdot r_{n,T}^2$$

$$K^{\epsilon}_{n+1,T} = \Delta_{n+1,T} \cdot (R^{\epsilon}_{n,T})^{-1}$$

$$K^{r}_{n+1,T} = \Delta_{n+1,T} \cdot (R^{r}_{n,T})^{-1}$$

$$\epsilon_{n+1,T} = \epsilon_{n,T} - K^{r}_{n+1,T} \cdot r_{n,T-1}$$

$$r_{n+1,T} = r_{n,T-1} - K^{\epsilon}_{n+1,T} \cdot \epsilon_{n,T}$$

$$R^{\epsilon}_{n+1,T} = R^{\epsilon}_{n,T} - \Delta_{n+1,T}^2 \cdot (R_{n,T-1})^{-1}$$

$$R^{r}_{n+1,T} = R^{r}_{n,T-1} - \Delta_{n+1,T}^2 \cdot (R^{\epsilon}_{n,T})^{-1}$$

nur wenn $T < n_{max}$

$$R^{\epsilon}_{n+1,T} = \lambda R^{\epsilon}_{n+1,T-1} + \epsilon_{n+1,T}^2 \cdot (1-\gamma_{n,T})^{-1}$$

nur wenn $T \geq n_{max}$

$$R^{r}_{n+1,T} = \lambda R^{r}_{n+1,T-1} + r_{n+1,T}^2 \cdot (1-\gamma_{n,T})^{-1}$$

## Ansprüche

1. Antiblockierregelsystem, enthaltend wenigstens einen Sensor zur Bestimmung der Verzögerung $V_R$ eines Fahrzeugrads, eine Einrichtung zur Ermittlung der Fahrzeugverzögerung $V_F$, eine Auswerteschaltung und eine Bremsdrucksteuereinrichtung, die neben Bremsdruckaufbau und Bremsdruckabbau auch eine Konstanthaltung des Bremsdrucks erlaubt, wobei diesen Größen $V_R$ und $V_F$ entsprechende Signale der Auswerteschaltung zugeführt werden, die Bremsdrucksteuersignale für die Bremsdrucksteuereinrichtung erzeugt und

6

wobei die Differenz D der Fahrzeug- und der Radverzögerung (D = $V_F - V_R$) zur Bremsdruckregelung ausgenutzt wird, dadurch gekennzeichnet, daß die Auswerteschaltung ein ladder Filter (5) und eine Steuereinrichtung (6) enthält, daß die Differenz D dem ladder Filter (5) zugeführt wird, daß in Phasen konstanten Drucks das ladder Filter (5) zeitweise von der Steuerschaltung auf Identifikation geschaltet wird, daß die dann ermittelten Reflektionskoeffizienten von der Steuerschaltung übernommen werden und daß aus dem Abstand der Reflektionskoeffizienten vom Wert "1", der ein Maß für die Stabilitätsreserve (Abstand des tatsächlichen stabilen Reifenschlupfs vom Maximum der μ-Schlupfkurve) darstellt, ein Signal zur Beeinflussung des Bremsdrucks Sinne einer Einstellung eines Schlupfwerts auf dem stabilen Ast der μ-Schlupfkurve und in der Nähe deren Maximums abgeleitet wird.

2. Antiblockierregelsystem nach Anspruch 1, dadurch gekennzeichnet, daß auch die ermittelte Kovarianz des ladder Filters in der Steuerschaltung berücksichtigt wird durch Instabilitätserkennung, wenn die Kovarianz eine festgelegte Schwelle überschreitet.

3. Antiblockierregelsystem nach Anspruch 1 oder 2, dadurch gekennzeichnet, daß die Differenz D mit einem Tiefpaßfilter gefiltert wird und daß bei Überschreiten einer Schwelle für wenigstens eine vorgegebene Zeit durch diese Differenz die Identifikationsphase abgebrochen wird.

4. Antiblockierregelsystem nach einem der Ansprüche 1 bis 3, dadurch gekennzeichnet, daß das ladder Filter ein normalisiertes ladder Filter ist.

## Claims

1. Anti-blocking system containing at least one sensor for determining the deceleration $V_R$ of a vehicle wheel, a device for determining the vehicle deceleration $V_F$, an evaluation circuit and a brake-pressure control device which, in addition to brake pressure build-up and brake-pressure reduction, also permits a holding constant of the brake pressure, signals corresponding to these variables $V_R$ and $V_F$ being fed to the evaluation circuit, which produces brake-pressure control signals for the brake-pressure control device, and the difference D between the vehicle deceleration and the wheel deceleration (D = $V_F - V_R$) being used for brake pressure regulation, characterised in that the evaluation circuit contains a ladder filter (5) and a control device (6), in that the difference D is fed to the ladder filter (5), in that in phases of constant pressure the ladder filter (5) is from time to time switched to identification by the control circuit, in that the reflection coefficients then determined are accepted by the control circuit and in that a signal for influencing the brake pressure – effect of setting a slip value to the stable branch of the μ-slip curve and in the vicinity of its maximum – is derived from the distance of the reflection coefficients from the value "1", which is a measure of the stability reserve (distance of the actual stable wheel slip from the maximum of·the μ-slip curve).

2. Anti-blocking system according to Claim 1, characterised in that the ascertained covariance of the ladder filter is also taken into account in the control circuit, by instability detection when the covariance exceeds a fixed threshold.

3. Anti-blocking system according to Claim 1 or 2, characterised in that the difference D is filtered using a low-pass filter and in that the identification phase is terminated if a threshold is exceeded by this difference for at least a predetermined time.

4. Anti-blocking system according to one of Claims 1 to 3, characterised in that the ladder filter is a normalised ladder filter.

## Revendications

1. Système de réglage antiblocage, comprenant au moins un détecteur pour déterminer la décélération $V_R$ d'une roue de véhicule, un dispositif pour déterminer la décélération $V_F$ du véhicule, un circuit d'exploitation et un dispositif de commande de la pression de freinage qui, à côté de l'établissement et de la suppression de la pression de freinage, permet également un maintien constant de la pression de freinage, système dans lequel des signaux correspondant à ces grandeurs $V_R$ et $V_F$ sont appliqués au circuit d'exploitation, lequel engendre des signaux de commande de la pression de freinage pour le dispositif de commande de la pression de freinage, et dans lequel la différence D entre la décélération du véhicule et la décélération de la roue (D = $V_F - V_R$) est utilisée pour la régulation de la pression de freinage, système caractérisé en ce que le circuit d'exploitation comprend un filtre à échelle (5) et un dispositif de commande (6), en ce que la différence D est appliquée au filtre à échelle (5), en ce que dans les phases de pression constante, le filtre à échelle (5) est périodiquement branché sur identification par le circuit de commande, en ce que les coefficients de réflexion alors déterminés sont pris en charge par le circuit de commande et en ce que, à partir de l'écart entre les coefficients de réflexion

7

et la valeur "1", écart qui constitue une mesure de la réserve de stabilité (écart entre le patinage effectif stable des pneumatiques et le maximum de la courbe de patinage μ), un signal est dérivé pour influencer la pression de freinage dans le sens d'un ajustement d'une valeur de patinage sur la branche stable de la courbe de patinage μ et au voisinage de son maximum.

2. Système de réglage antiblocage selon la revendication 1, caractérisé en ce qu'également la covariance ainsi déterminée du filtre à échelle est prise en compte dans le circuit de commande par identification de l'instabilité, lorsque la covariance dépasse un seuil fixé.

3. Système de réglage antiblocage selon la revendication 1 ou la revendication 2, caractérisé en ce que la différence D est filtrée et en ce que, lorsqu'un seuil est dépassé par cette différence pendant au moins un temps prédéfini, la phase d'identification est interrompue.

4. Système de réglage antiblocage selon une des revendications 1 à 3, caractérisé en ce que le filtre à échelle est un filtre à échelle normalisé.